# EUROPÄISCHE PATENTSCHRIFT

(11) **EP 2 199 162 B1**
(45) Veröffentlichungstag und Bekanntmachung des Hinweises auf die Patenterteilung: **07.08.2019**
(21) Anmeldenummer: 09012912.3
(22) Anmeldetag: 13.10.2009
(51) Int. Cl.: B60T 7/12, B60T 13/26, B60T 13/68

(54) **Verfahren zum Betrieb einer Feststellbremseinrichtung, Feststellbremseinrichtung, Bremsanlage zur Durchführung des Verfahrens, Bremsanlage mit dieser Feststellbremseinrichtung sowie Fahrzeug zur Durchführung des Verfahrens bzw. mit dieser Feststellbremseinrichtung bzw. mit dieser Bremsanlage**
Method for operating a parking brake device, parking brake device, brake unit for implementing the procedure, brake unit with this parking brake device and vehicle for implementing the procedure and/or with this parking brake device and/or with this braking unit
Procédé de fonctionnement d'un dispositif de frein de parking, dispositif de frein de parking, installation de freinage pour l'exécution du procédé, installation de freinage dotée de ce dispositif de frein de parking ainsi que véhicule destiné à l'exécution du procédé ou doté de ce dispositif de frein de parking ou doté de cette installation de freinage

(30) Priorität: 19.12.2008 DE 102008063952
(43) Veröffentlichungstag der Anmeldung: 23.06.2010
(73) Patentinhaber: WABCO GmbH, 30453 Hannover (DE)
(72) Erfinder: Bensch, Uwe, 30161 Hannover (DE); Strache, Wolfgang, Dr., 30966 Hemmingen (DE); Struwe, Otmar, 30163 Hannover (DE); Rosendahl, Hartmut, 30178 Hannover (DE); Djeutchouang Djiya, Guy Alain, 30459 Hannover (DE)
(74) Vertreter: Lauerwald, Jörg

(56) Entgegenhaltungen:
- EP-A1- 1 785 325
- EP-A1- 2 055 542
- DE-A1-102005 024 120
- DE-A1-102007 008 504

## Beschreibung

Die Erfindung betrifft ein Verfahren zum Betrieb einer zum elektropneumatischen oder elektrohydraulischen Feststellen eines Fahrzeugs vorgesehen Feststellbremseinrichtung gemäß dem Oberbegriff von Anspruch 1, eine Feststellbremseinrichtung zum elektropneumatischen oder elektrohydraulischen Feststellen eines Fahrzeugs gemäß dem Oberbegriff von Anspruch 8, eine Bremsanlage und ein Fahrzeug.

Eine bekannte Feststellbremseinrichtung zum Feststellen, insbesondere Abstellen, eines Fahrzeugs weist elektromagnetisch schaltbare Ventile auf, die derart geschaltet sind, dass im Fahrbetrieb des Fahrzeugs seine Feststellbremse gelöst ist. Im Falle einer gelösten Feststellbremse sind die Ventile in der Regel unbestromt, um einen minimalen Energieverbrauch und eine minimale Wärmeabgabe zu erreichen.

Zum Einlegen der Feststellbremse muss bei der bekannten Feststellbremseinrichtung wenigstens ein Ventil zumindest zum Umschalten seines Schaltzustands und ggf. auch dauerhaft bestromt werden. Hierfür wird die bekannte Feststellbremseinrichtung mittels einer elektrischen Verbindung mit elektrischer Energie einer Energieversorgungseinrichtung versorgt.

Aus der DE 10 2007 008 504 A1 ist ein Feststellbremsmodul mit einer ersten druckmittelmengenverstärkenden Ventileinrichtung mit einem mit einem Druckmittelvorratsbehälter verbindbaren Einlass, und einer zweiten Ventileinrichtung mit einem mit einem Anhängersteuerventil zum Steuern einer Anhängerbremse verbindbaren Anschluss bekannt. Der an dem Anschluss herrschende Druck ist unabhängig vom Druck in dem Druckmittelvorratsbehälter einstellbar.

Fahrzeuge zum Transport von Gefahrgut weisen einen elektrischen Hauptschalter auf, mittels dem die elektrische Energieversorgung im Wesentlichen aller elektrisch betriebener Fahrzeugkomponenten abschaltbar ist, so dass von diesen Komponenten keine Gefahr bzgl. Überhitzung oder Funkenüberschlag o. ä. ausgehen kann, welche das Gefahrgut zur Explosion führen könnte. Im Falle der mittels des Hauptschalters unterbrochenen elektrischen Energieversorgung ist somit auch die Feststellbremse bekannter Feststellbremseinrichtungen nicht mehr einlegbar und daher das Gefahrgutfahrzeug nicht sicher abstellbar.

Der Erfindung liegt deshalb das Problem zugrunde, eine Feststellbremseinrichtung und ein Verfahren zum Betrieb einer Feststellbremseinrichtung zum elektropneumatischen oder elektrohydraulischen Feststellen eines Gefahrgutfahrzeugs mit einem derartigen elektrischen Hauptschalter bereitzustellen, wobei ein sicheres Abstellen des Fahrzeugs mit eingelegter Feststellbremse auch bei einer Betätigung des Hauptschalters gewährleistet ist, bei der die elektrische Energieversorgung der Feststellbremseinrichtung unterbrochen wird.

Die Erfindung löst dieses Problem mit den Merkmalen der Ansprüche 1, 6, 11, 12 Erfindungsgemäß weist die Feststellbremseinrichtung einen ersten Zustand auf, in welchem die Feststellbremse eingelegt und der Druck in einer ersten Druckmittelleitung zum pneumatischen bzw. hydraulischen Betätigen wenigstens eines Bremszylinders, insbesondere Federspeicherbremszylinders, bis zu einem Minimaldruck, welcher insbesondere dem Umgebungsluftdruck entsprechen kann, absenkbar ist. Im Falle einer Betätigung des Bremszylinders spannt dieser zum Einlegen der Feststellbremse zu, bspw. indem ein Bremsbelag aufgrund einer vorgespannten Feder gegen eine Bremsscheibe gedrückt wird.

Erfindungsgemäß weist die Feststellbremseinrichtung ferner einen zweiten Zustand auf, in welchem ein jeweiliger Druck in der ersten Druckmittelleitung gehalten wird. Die Feststellbremseinrichtung ist dabei derart ausgebildet, dass sie im Falle eines Stillstands des Fahrzeugs und gleichzeitig gelöster Feststellbremse den zweiten Zustand einnimmt und in dem Fall, dass bei Vorliegen des zweiten Zustands die elektrische Energieversorgung unterbrochen wird, den ersten Zustand einnimmt und dadurch die Feststellbremse eingelegt wird.

Die Feststellbremseinrichtung benötigt elektrische Energie um den zweiten Zustand aufrechtzuerhalten. Deshalb schaltet die Feststellbremseinrichtung selbsttätig vom zweiten in den ersten Zustand, d.h. legt die Feststellbremse ein, wenn die elektrische Energieversorgung der Feststellbremseinrichtung unterbrochen ist. Die Erfindung kann deshalb vorteilhaft in Gefahrgutfahrzeugen eingesetzt werden, da in Erwiderung auf eine Betätigung bzw. ein Ausschalten des elektrischen Hauptschalters die Feststellbremseinrichtung die Feststellbremse selbsttätig einlegt, falls diese nicht schon eingelegt ist. Das Fahrzeug kann deshalb nicht unbeabsichtigt wegrollen.

Die Erfindung erfüllt somit hohe Sicherheitsanforderungen, welche an eine Feststellbremseinrichtung bei Gefahrgutfahrzeugen zu stellen sind und ermöglicht ein sicheres elektropneumatisches bzw. elektrohydraulisches Feststellen auch für Gefahrgutfahrzeuge.

Erfindungsgemäß weist die Feststellbremseinrichtung einen dritten Zustand auf, in welchem der Druck in der ersten Druckmittelleitung zum Lösen der Feststellbremse bzw. des Bremszylinders bis zu einem Maximaldruck, insbesondere Vorratsdruck, erhöht wird. Die Feststellbremseinrichtung ist hierbei derart ausgebildet, dass sie in dem Fall, dass der dritte Zustand vorliegt, in Erwiderung auf ein Absinken einer detektierten Fahrzeuggeschwindigkeit unter eine Grenzgeschwindigkeit oder in Erwiderung auf ein Erreichen eines Fahrzeugstillstands von dem dritten Zustand direkt oder unter Zwischenschaltung eines weiteren Zustands in den zweiten Zustand schaltet. Während der Fahrt mit einer Fahrzeuggeschwindigkeit, welche mindestens der Grenzgeschwindigkeit entspricht, nimmt die Feststellbremseinrichtung somit den dritten Zustand ein, in welchem insbesondere keine Ventile bestromt werden müssen. Hierdurch ist ein energieverbrauchsarmer Betrieb der Feststellbremseinrichtung möglich. Erst wenn die Möglichkeit besteht, dass das Fahrzeug mittels der Feststellbremse festgestellt werden soll bzw. im Falle des Fahrzeugstillstands bzw. einer niedrigen Fahrzeuggeschwindigkeit nimmt die Feststellbremseinrichtung den zweiten Zustand ein, in welchem sie für ein Einlegen der Feststellbremse "scharfgestellt" ist.

Erfindungsgemäß ist die Feststellbremseinrichtung derart ausgebildet, dass in dem ersten Zustand ein Druck in der ersten Druckmittelleitung durch eine zweite Druckmittelleitung bis zu dem Minimaldruck absenkbar ist und in dem dritten Zustand dieser Druck in der zweiten Druckmittelleitung bis zu dem Maximaldruck erhöhbar ist, wobei die Feststellbremseinrichtung in dem Fall, dass der dritte Zustand vorliegt, zunächst in einen vierten und erst hiernach in den zweiten Zustand schaltet. Das Schalten in den vierten Zustand veranlasst hierbei ein Absperren der ersten Druckmittelleitung von der zweiten Druckmittelleitung, bevor der Druck in der zweiten Druckmittelleitung in dem zweiten Zustand abgesenkt wird. Hierdurch wird einem Absinken des Drucks in der ersten Druckmittelleitung durch ein etwaiges Entweichen von Druckmittel durch die zweite Druckmittelleitung beim Schalten in den zweiten Zustand entgegengewirkt, so dass die Feststellbremse beim Schalten in den zweiten Zustand nicht unbeabsichtigt eingelegt wird.

In einer vorteilhaften Weiterbildung ist die Feststellbremseinrichtung derart ausgebildet, dass sie in dem Fall, dass der zweite Zustand vorliegt, bei dem die Feststellbremse "scharfgeschaltet" ist, in Erwiderung auf ein Ansteigen der Fahrzeuggeschwindigkeit auf bzw. über einen vorgegebenen Grenzwert oder in Erwiderung auf ein Anfahren des Fahrzeugs vorzugsweise zunächst in den vierten Zustand und hiernach in den dritten Zustand schaltet, bei dem die Feststellbremse gelöst ist. Dieser dritte Zustand kann ohne Zufuhr elektrischer Energie aufrechterhalten werden. Deshalb ist ein energiesparender Betrieb der Feststellbremseinrichtung möglich. Zudem führt ein Ausfall der elektrischen Energieversorgung während der Fahrt nicht zu einem plötzlichen Einlegen der Feststellbremse und somit zu einer unter Umständen gefährlichen Vollbremsung.

Durch die Zwischenschaltung des vierten Zustands wird sichergestellt, dass die zweite Druckmittelleitung beim Schalten in den dritten Zustand einen Druck aufweist, welcher wenigstens so hoch ist wie der Druck in der ersten Druckmittelleitung. Hiermit wird einem unbeabsichtigten Einlegen der Feststellbremse durch einen Druckabfall in der ersten Druckmittelleitung beim Schalten in den dritten Zustand bzw. bei einem pneumatischen bzw. hydraulischen Verbinden der ersten mit der zweiten Druckmittelleitung entgegengewirkt.

Der Grenzwert, ab welchem ein die Feststellbremseinrichtung in dem Fall, dass sie "scharfgeschaltet" ist, bei einer Beschleunigung des Fahrzeugs entschärft wird, kann identisch mit dem Grenzwert sein, ab welchem die Feststellbremseinrichtung bei einer Verlangsamung des Fahrzeugs "scharfgeschaltet" wird. Alternativ können diese Grenzwerte jedoch auch voneinander abweichen.

In einer vorteilhaften Weiterbildung ist die Feststellbremseinrichtung derart ausgebildet, dass sie in dem Fall, dass der erste Zustand vorliegt und die Zündung des Fahrzeugs eingeschaltet ist, in Erwiderung auf ein einen Wunsch zum Lösen der Feststellbremse repräsentierendes Signal zunächst in den dritten Zustand schaltet und hiernach, insbesondere nachdem sich die Drücke in der ersten und der zweiten Druckmittelleitung angeglichen haben, in den vierten Zustand und nachfolgend in den zweiten Zustand schaltet. In dem dritten Zustand wird hierbei innerhalb kurzer Zeit ein zum Lösen der Feststellbremse ausreichender Druck in der ersten Druckmittelleitung aufgebaut, hiernach in dem vierten Zustand die pneumatische bzw. hydraulische Verbindung von der ersten Druckmittelleitung zur zweiten Druckmittelleitung abgesperrt und nachfolgend die Feststellbremseinrichtung durch Schalten in den zweiten Zustand "scharfgeschaltet".

In einer vorteilhaften Weiterbildung weist die Feststellbremseinrichtung ein Drucksensiermittel auf, mittels dem der Druck in der ersten Druckmittelleitung bzw. ein nach Maßgabe dieses Druckes ausgesteuerter Druck ermittelbar ist. Der nach Maßgabe des Drucks in der ersten Druckmittelleitung bereitgestellte Druck kann hierbei von einem der ersten Druckmittelleitung nachgeschalteten Relaisventils bereitgestellt werden. Die Feststellbremseinrichtung ist hierbei derart ausgebildet, dass sie in dem Fall, dass der zweite Zustand vorliegt, in Erwiderung auf ein Abfallen des ermittelten Druckes unter einen vorgegebenen Drucksollwert zum Absperren der ersten von der zweiten Druckmittelleitung in den vierten Zustand schaltet, hiernach in den dritten Zustand schaltet und nach Erreichen des Drucksollwertes oder eine höheren Wertes oder nach einer vorgegebenen Zeitdauer wieder in den vierten Zustand und hiernach schließlich in den zweiten Zustand zurückschaltet. Hierdurch wird einem unbeabsichtigten Einlegen der Feststellbremse in dem Fall, dass der zweite Zustand vorliegt bzw. die Feststellbremse "scharfgeschaltet" ist, entgegengewirkt. Falls nämlich der Druck in der ersten Druckmittelleitung bspw. aufgrund eines Lecks sinkt und somit die Gefahr besteht, dass die Feststellbremse eingelegt wird, ermittelt dies die Feststellbremseinrichtung mittels des Drucksensiermittels und erhöht in Erwiderung hierauf kurzzeitig den Druck in der ersten Druckmittelleitung. Jeweils unter Zwischenschaltung des vierten Zustands schaltet sie hierfür kurzzeitig in den dritten Zustand und nachfolgend in den zweiten Zustand zurück, d.h. die Feststellbremse wird zur Erhöhung des Drucks in der ersten Druckmittelleitung kurzzeitig "entschärft" und hiernach wieder "scharfgeschaltet".

Vorteilhafterweise weist die Feststellbremseinrichtung wenigstens zwei Ventile, nämlich ein erstes Ventil, welches insbesondere ein 3/2-Wege-Bistabilmagnetventil ist, und ein zweites Ventil, welches insbesondere ein 2/2-Wege-Magnetventil ist, auf. Darüber hinaus ist neben der ersten und der zweiten noch eine dritte Druckmittelleitung vorgesehen, welche zur Erhöhung des Drucks in der zweiten bzw. ersten Druckmittelleitung mit einem Druckmittelvorrat pneumatisch bzw. hydraulisch verbunden werden kann. Darüber hinaus weist die Feststellbremseinrichtung einen Druckmittelausgang auf, durch welchen Druckmittel zur Verringerung eines Druckes abgelassen werden kann.

Das Fahrzeug weist Federspeicherbremszylinder auf, welche mit dem in der ersten Druckmittelleitung vorliegenden Druck beaufschlagt werden können. Wenn die Federspeicherbremszylinder mit einem ausreichenden Druck beaufschlagt sind, ist die Feststellbremse gelöst. Anderenfalls ist die Feststellbremse mittels einer vorgespannten Feder in jedem Federspeicherbremszylinder eingelegt.

Die Zustände der Feststellbremseinrichtung sind wie folgt gekennzeichnet:
Erster Zustand: Im ersten Zustand ist die erste Druckmittelleitung durch das unbestromte zweite Ventil, durch die zweite Druckmittelleitung und durch das in seinem ersten Schaltzustand befindliche erste Ventil pneumatisch bzw. hydraulisch mit dem Druckmittelausgang verbunden, d.h. die Feststellbremse ist bzw. wird eingelegt.

Zweiter Zustand: Im zweiten Zustand ist die erste Druckmittelleitung mittels des bestromten zweiten Ventils von der zweiten Druckmittelleitung abgesperrt und die zweite Druckmittelleitung durch das in seinem ersten Schaltzustand befindliche erste Ventil pneumatisch bzw. hydraulisch mit dem Druckmittelausgang verbunden, d.h. die Feststellbremseinrichtung ist "scharfgeschaltet".

Dritter Zustand: In dem dritten Zustand ist die erste Druckmittelleitung durch das unbestromte zweite Ventil, durch die zweite Druckmittelleitung und durch das in seinem zweiten Schaltzustand befindliche erste Ventil pneumatisch bzw. hydraulisch mit der dritten Druckmittelleitung verbunden, d.h. die Feststellbremse ist bzw. wird gelöst, vorausgesetzt der Vorratsdruck im Vorratsbehälter ist größer als ein Lösedruck der Federspeicher zum Lösen gegen Bremsscheiben bzw. Bremstrommeln zugespannter Bremsbeläge.

Vierter Zustand: In dem vierten Zustand ist schließlich die erste Druckmittelleitung mittels des bestromten zweiten Ventils von der zweiten Druckmittelleitung abgesperrt und diese zweite Druckmittelleitung durch das in seinem zweiten Schaltzustand befindliche erste Ventil pneumatisch bzw. hydraulisch mit der dritten Druckmittelleitung verbunden, d.h. es liegt ein kurzzeitiger Zustand vor, welcher einem unbeabsichtigten Einlegen der Feststellbremse entgegenwirkt, wenn die Feststellbremse "scharfgeschaltet" oder "entschärft" bzw. zwischen dem zweiten Zustand und dem dritten Zustand umgeschaltet werden soll. Insbesondere wird verhindert, dass ein Druck, mit welchem die Federspeicherbremszylinder beaufschlagt sind, absinkt und die Federn in den Federspeicherbremszylindern infolge dessen die Feststellbremse einlegen bzw. Bremsbeläge gegen Bremsscheiben zuspannen.

Durch diese Anordnung der Ventile und Druckmittelleitungen können die vier Zustände der Feststellbremseinrichtung mit nur wenigen Bauteilen, insbesondere nur zwei Ventilen, ermöglicht werden. Das Bistabilmagnetventil ermöglicht hierbei, dass sowohl im Fahrbetrieb bzw. im dritten Zustand als auch im Falle des festgestellten Fahrzeugs bzw. im ersten Zustand kein Ventil bestromt werden muss und somit ein energiesparender Betrieb der Feststellbremseinrichtung bzw. sicherer Betrieb des Fahrzeugs möglich ist.

Vorteilhafterweise ist die Feststellbremseinrichtung derart ausgebildet, dass sie in dem Fall, dass der erste Zustand vorliegt, diesen ersten Zustand solange beibehält, wie die elektrische Verbindung unterbrochen und/oder die bzw. eine Zündung ausgeschaltet ist. Hierdurch ist sichergestellt, dass sich die Feststellbremse des abgestellten Fahrzeugs nicht ungewollt löst.

In einer vorteilhaften Weiterbildung weist die Feststellbremseinrichtung ein drittes Ventil, insbesondere 3/2-Wege-Magnetventil, und eine vierte mit einem Anhängersteuerventil pneumatisch bzw. hydraulisch verbindbare Druckmittelleitung auf, wobei die zweite Druckmittelleitung durch dieses dritte Ventil im Falle des unbestromten dritten Ventils pneumatisch bzw. hydraulisch mit der vierten Druckmittelleitung verbunden und im Falle des bestromten dritten Ventils mittels dieses dritten Ventils gegen die vierte Druckmittelleitung abgesperrt werden kann und wobei die Feststellbremseinrichtung derart ausgebildet ist, dass das dritte Ventil parallel mit dem zweiten Ventil bestromt bzw. stromlos geschaltet werden kann. In dieser Ausbildung der Erfindung ist die Feststellbremseinrichtung zum Einsatz in einem Zugfahrzeug, an welches ein Anhängefahrzeug angekoppelt werden kann, geeignet. Dem Anhängersteuerventil können hierbei mittels des dritten Ventils und der vierten Druckmittelleitung die gleichen Drücke bereitgestellt werden wie der ersten Druckmittelleitung mittels des zweiten Ventils. Somit kann die Feststellbremse parallel bzw. gleichzeitig an dem Zugfahrzeug und an dem Anhängefahrzeug eingelegt bzw. gelöst werden.

Alternativ oder zusätzlich zu der vierten Druckmittelleitung weist die Feststellbremseinrichtung in einer Weiterbildung eine fünfte Druckmittelleitung auf, welche mit einem Anhängersteuerventil pneumatisch bzw. hydraulisch verbunden werden kann. Die zweite Druckmittelleitung kann hierbei durch das dritte Ventil im Falle des bestromten dritten Ventils pneumatisch bzw. hydraulisch mit der fünften Druckmittelleitung verbunden werden und im Falle des unbestromten dritten Ventils mittels dieses dritten Ventils gegen die fünfte Druckmittelleitung abgesperrt werden. In dem Fall, dass die Feststellbremseinrichtung von dem dritten Zustand ggf. unter Zwischenschaltung des vierten Zustands in den zweiten Zustand schaltet, ist das dritte Ventil wenigstens solange, wie dieser zweite Zustand vorliegt, unbestromt. Aufgrund dieser Ausbildung der Feststellbremseinrichtung ist es möglich, die Feststellbremse an dem Zugfahrzeug einzulegen, Bremsen an dem angekoppelten Anhängefahrzeug jedoch unbetätigt zu lassen, um bspw. einem Einfrieren dieser Bremsen entgegenzuwirken.

In einer Weiterbildung ist die zweite Druckmittelleitung durch das dritte Ventil bei Bestromung des dritten Ventils pneumatisch bzw. hydraulisch mit der fünften Druckmittelleitung verbunden und im unbestromten Falle des dritten Ventils mittels dieses dritten Ventils gegen die fünfte Druckmittelleitung abgesperrt. Die Feststellbremseinrichtung ist hierbei derart ausgebildet, dass sie in Erwiderung auf ein einen Wunsch zum Lösen der Feststellbremse repräsentierendes Signal, bspw. nach einer Betätigung eines hierfür vorgesehenen Schalters, zunächst in den dritten Zustand schaltet. Danach, insbesondere nachdem sich die Drücke in der ersten und zweiten Druckmittelleitung angeglichen haben, schaltet die Feststellbremseinrichtung in den vierten Zustand und bestromt das dritte Ventil. Anschließend, insbesondere nachdem sich die Drücke in der fünften und zweiten Druckmittelleitung angeglichen haben, wird das dritte Ventil nicht weiter bestromt und die Feststellbremseinrichtung schaltet nachfolgend in den zweiten Zustand. Hierdurch wird vor dem "Scharfschalten" der Feststellbremseinrichtung sichergestellt, dass die fünfte Druckmittelleitung bzw. das Anhängersteuerventil mit einem ausreichend großen Druck beaufschlagt sind, d.h. Bremsen an dem Anhängefahrzeug gelöst sind. Erst danach wird das dritte Ventil nicht mehr bestromt und hierdurch der Druck in der fünften Druckmittelleitung gehalten.

In einer vorteilhaften Weiterbildung weist die Feststellbremseinrichtung ein Zeitmessmittel auf, mittels dem eine Verweildauer in dem zweiten Zustand ermittelt werden kann, wobei die Feststellbremseinrichtung derart ausgebildet ist, dass sie in dem Fall, dass die ermittelte Verweildauer eine vorbestimmte Maximaldauer erreicht bzw. übersteigt, zum Einlegen der Feststellbremse in den ersten Zustand schaltet. Nach einer Verweildauer von bspw. einer oder zwei Minuten in dem zweiten Zustand wird bei gleichzeitigem Fahrzeugstillstand somit automatisch die Feststellbremse eingelegt, um einem hohen Energieverbrauch bzw. einer Erwärmung von Magnetspulen der Ventile aufgrund einer andauernden Bestromung entgegenzuwirken.

In einer Weiterbildung ist die Feststellbremseinrichtung derart ausgebildet, dass sie in dem Fall, dass der erste Zustand vorliegt und das Fahrzeug abgestellt ist, in Erwiderung auf ein einen Beschleunigungswunsch repräsentierendes Signal in den dritten Zustand schaltet, d.h. die Feststellbremse löst. Diese Ausbildung der Feststellbremseinrichtung ermöglicht ein automatisches Lösen der Feststellbremse beim Anfahren des Fahrzeugs, wobei bspw. mittels eines Gaspedals das den Beschleunigungswunsch repräsentierende Signal erzeugt wird.

Eine erfindungsgemäße Bremsanlage ist derart ausgebildet, dass mittels dieser Bremsanlage das erfindungsgemäße Verfahren durchführbar ist, bzw. weist die erfindungsgemäße Feststellbremseinrichtung auf. Zusätzlich kann die Bremsanlage weitere Regel- bzw. Steuereinrichtungen, Bedienmittel wie Halter, Sensoren, weitere Druckmittelleitungen, eine Luftaufbereitungseinrichtung, die Bremszylinder und weitere für eine Betriebsbremsung und/oder zum Feststellen des Fahrzeugs verwendbare Komponenten aufweisen.

Weitere Ausführungsformen ergeben sich aus den Ansprüchen sowie aus den anhand der Zeichnung näher erläuterten Ausführungsbeispielen. In der Zeichnung zeigen:
- Fig. 1: eine Feststellbremseinrichtung gemäß einem ersten Ausführungsbeispiel;
- Fig. 2: eine Feststellbremseinrichtung gemäß einem zweiten Ausführungsbeispiel und
- Fig. 3: ein Flussdiagramm zur Veranschaulichung von Schaltvorgängen bzw. des Verfahrens zum Betrieb der Feststellbremseinrichtung gemäß dem ersten und dem zweiten Ausführungsbeispiel.

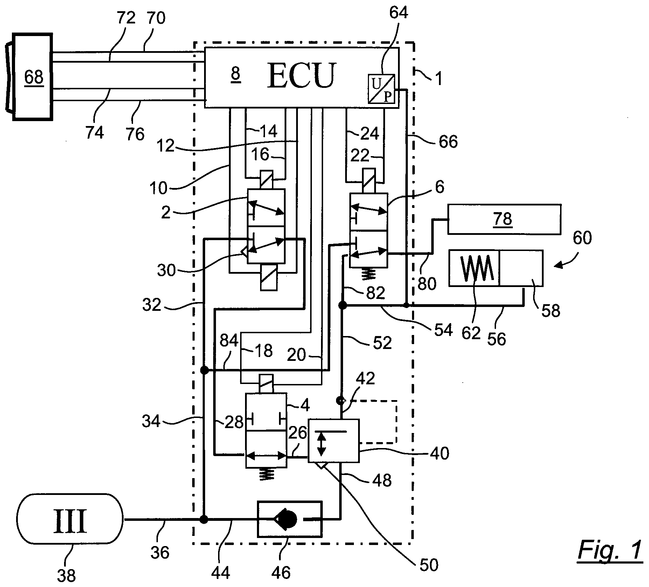

Fig. 1 zeigt eine Feststellbremseinrichtung 1 gemäß einem ersten Ausführungsbeispiel der Erfindung. Die Feststellbremseinrichtung 1 weist ein als Bistabilmagnetventil ausgebildetes erstes Ventil 2, ein als 2/2-Wege-Magnetventil ausgebildetes zweites Ventil 4 und ein als 3/2-Wege-Magnetventil ausgebildetes drittes Ventil 6 auf. Die Ventile 2, 4 und 6 werden von einer Steuereinrichtung 8 gesteuert bzw. geschaltet. Alle drei Ventile 2, 4 und 6 weisen jeweils zwei Schaltzustände auf, wobei bestrombare Magnetspulen ein Umschalten zwischen diesen Schaltzuständen bzw. eine Wahl eines Schaltzustandes ermöglichen.

Die Magnetspulen der Ventile 2, 4 und 6 werden über elektrische Leitungen 10, 12, 14, 16, 18, 20, 22 und 24 ausgehend von der Steuereinrichtung 8 bestromt. Die elektrischen Leitungen 10 und 12 bzw. 14 und 16 müssen hierbei lediglich zum Umschalten zwischen einem ersten Schaltzustand und einem zweiten Schaltzustand bestromt werden, wobei zum Umschalten jeweils eine von zwei Spulen des ersten Ventils 2 angesteuert wird.

Alternativ zu dem hier gezeigten Ausführungsbeispiel kann das erste Ventil eine Spule aufweisen, mittels derer durch Umkehr der Stromrichtung beide Schaltzustände schaltbar sind, wobei in diesem Fall lediglich die elektrischen Leitungen 10 und 12 oder die elektrischen Leitungen 14 und 16 vorgesehen sein müssen.

Stromlos verharrt das erste Ventil 2 in seinem jeweiligen Schaltzustand. Das zweite Ventil 4 und das dritte Ventil 6 weisen dagegen einen bestromten und einen unbestromten Schaltzustand auf, wobei der bestromte Schaltzustand gegen die Kraft einer Feder für die Dauer der Bestomung aufrechterhalten wird. Mittels des ersten Ventils 2 und des zweiten Ventils 4 kann ein Druck in einer ersten Druckmittelleitung 26 ausgesteuert werden.

Die im vorliegenden Ausführungsbeispiel gezeigte Feststellbremseinrichtung 1 ist eine elektropneumatische Feststellbremseinrichtung. Somit ist das Druckmittel vorzugsweise Luft, jede Druckmittelleitung vorzugsweise eine Druckluftleitung und jedes Ventil 2, 4 und 6 vorzugsweise als elektropneumatisches Ventil ausgebildet. Alternativ kann die Feststellbremseinrichtung jedoch auch als elektrohydraulische Einrichtung ausgebildet sein, wobei als Druckmittel eine Flüssigkeit, z.B. ein Hydrauliköl, verwendet wird und die Druckmittelleitungen als Hydraulikleitungen und die Ventile als elektrohydraulische Ventile ausgebildet sind. Durch das zweite Ventil 4 kann die erste Druckmittelleitung 26 pneumatisch mit einer zweiten Druckmittelleitung 28 verbunden werden, so dass sich zumindest nach einer gewissen Zeitspanne der gleiche Druck in beiden Leitungen 26, 28 einstellt.

Die Feststellbremseinrichtung 1 weist vier unterschiedliche Zustände auf, welche sie in Abhängigkeit von den Schaltzuständen des ersten Ventils 2 und des zweiten Ventils 4 einnehmen kann. In einem ersten Zustand der Feststellbremseinrichtung 1 weist das erste Ventil 2 einen in der Figur dargestellten ersten Schaltzustand und das zweite Ventil 4 einen in der Figur dargestellten unbestromten Schaltzustand auf. In diesem ersten Zustand der Feststellbremseinrichtung 1 ist ein Druckmittelausgang bzw. Druckluftausgang 30 durch das erste Ventil 2, durch die zweite Druckmittelleitung 28 und durch das zweite Ventil 4 mit der ersten Druckmittelleitung 26 pneumatisch verbunden. Hierbei wird der Druck in der ersten Druckmittelleitung 26 durch Ablassen von Druckluft über den Druckmittelausgang 30 bis auf den Umgebungsluftdruck abgesenkt bzw. weist bereits den Umgebungsluftdruck auf. Die erste Druckmittelleitung 26 ist entlüftet. Im ersten Zustand ist die Feststellbremse eingelegt.

In einem zweiten Zustand der Feststellbremseinrichtung 1 befindet sich das erste Ventil 2 wiederum in seinem ersten Schaltzustand, so dass die zweite Druckmittelleitung 28 durch das erste Ventil 2 entlüftet ist. Das zweite Ventil 4 ist in dem zweiten Zustand der Feststellbremseinrichtung 1 bestromt und sperrt die erste Druckmittelleitung 26 von der zweiten Druckmittelleitung 28 ab, so dass ein in der ersten Druckmittelleitung 26 befindlicher Druck gehalten wird. Im zweiten Zustand ist die Feststellbremseinrichtung 1 "scharfgeschaltet".

In einem dritten Zustand der Feststellbremseinrichtung 1 weist das erste Ventil 2 einen zweiten Schaltzustand auf, in welchem die zweite Druckmittelleitung 28 pneumatisch über Druckmittelleitungen 32, 34 und 36 mit einem Druckmittelvorratsbehälter bzw. Druckluftvorratsbehälter 38 verbunden ist. Das zweite Ventil 4 ist im dritten Zustand der Feststellbremseinrichtung 1 unbestromt. Im dritten Zustand ist die Feststellbremse gelöst.

In einem vierten Zustand der Feststellbremseinrichtung 1 befindet sich das erste Ventil 2 in seinem zweiten Schaltzustand und das zweite Ventil 4 ist bestromt. Hierbei wird der jeweilige Druck in der ersten Druckmittelleitung 26 gehalten, während die zweite Druckmittelleitung 28 pneumatisch mit dem Druckmittelvorratsbehälter 38 verbunden ist. Im vierten Zustand wird die erste Druckmittelleitung 26 vor einem Entlüften beim Umschalten zwischen dem zweiten und dem dritten Schaltzustand geschützt, damit die Feststellbremse nicht bedingt durch diesen Umschaltvorgang ungewollt eingelegt wird.

Ein Relaisventil 40 stellt Druckmittel bzw. Druckluft mit dem in der ersten Druckmittelleitung 26 vorliegenden Druck einer Druckmittelleitung 42 druckmittellmengenverstärkt bzw. luftmengenverstärkt bzw. in größerer Luftmenge bereit. Luft bezieht das Relaisventil 40 hierbei aus dem Druckmittelvorratsbehälter 38 über die Druckmittelleitung 36, eine Druckmittelleitung 44, ein Rückschlagventil 46 und eine Druckmittelleitung 48. Zur Erniedrigung des Druckes in der Druckmittelleitung 42 weist das Relaisventil 40 einen Druckmittelausgang 50 auf, über welchen Druckmittel abgelassen werden kann.

Das Druckmittel wird über die Druckmittelleitung 42, eine Druckmittelleitung 52, eine Druckmittelleitung 54 und eine Druckmittelleitung 56 einem Federspeicherteil 58 eines kombinierten Federspeicherbremszylinders 60 bereitgestellt. Dieser kombinierte Federspeicherbremszylinder 60 weist eine Feder 62 auf, mittels welcher ein zugeordneter Bremsbelag zum Feststellen des Fahrzeugs zugespannt werden kann. Im Falle des entlüfteten Federspeicherteils 58 bzw. der entlüfteten ersten Druckmittelleitung 26 ist die Feststellbremse eingelegt. Im Falle des belüfteten Federspeicherteils 58 bzw. der belüfteten ersten Druckmittelleitung 26 wirkt der Druck in dem Federspeicherteil 58 einer Federkraft der vorgespannten Feder 62 entgegen, so dass die Feststellbremse gelöst ist.

Ein Drucksensiermittel 64 ist durch eine Druckmittelleitung 66 mit der Druckmittelleitung 54 verbunden. Somit liegt ein Druck in der Druckmittelleitung 66 vor, der mittels des Relaisventils 40 nach Maßgabe des Drucks in der ersten Druckmittelleitung 26 ausgesteuert wird, welcher mittels des Drucksensiermittels 64 ermittelt werden kann. Die Steuereinrichtung 8 kann hierbei ermitteln, ob dieser Druck unter einen vorgegebenen Drucksollwert sinkt und ggf. durch kurzzeitiges Belüften der ersten Druckmittelleitung 26 den Druck in dieser ersten Druckmittelleitung und nachfolgend auch den mittels des Relaisventils 40 ausgesteuerten Druck wieder erhöhen.

Mittels einer Schalteinrichtung 68 kann ein einen Wunsch zum Lösen der Feststellbremse sowie ein einen Wunsch zum Einlegen der Feststellbremse repräsentierendes Signal erzeugt werden, welches mittels elektrischer Leitungen 70, 72, 74 und 76 der Steuereinrichtung 8 zugeleitet werden kann.

Die Feststellbremseinrichtung 1 ist zur Verwendung in einem Zugfahrzeug geeignet, an welches ein Anhängefahrzeug angekoppelt werden kann. Zur Steuerung der Bremsen des Anhängefahrzeugs ist ein Anhängersteuerventil 78 vorgesehen. Im unbestromten Zustand des dritten Ventils 6 ist das Anhängersteuerventil 78 über eine Druckmittelleitung 80, über dieses dritte Ventil 6, über eine Druckmittelleitung 82, die Druckmittelleitung 52 und die Druckmittelleitung 42 pneumatisch mit dem Ausgang des Relaisventils 40 verbunden. Am Anhängersteuerventil 78 liegt somit der in der ersten Druckmittelleitung 26 vorliegende Druck an. Wird jedoch das dritte Ventil 6 bestromt, so liegt am Anhängersteuerventil 78 im Wesentlichen der im Vorratsbehälter 38 herrschende Druck bzw. Maximaldruck an, da dieses Anhängersteuerventil 78 in diesem Fall pneumatisch durch die Druckmittelleitung 80, durch das dritte Ventil 6, durch eine Druckmittelleitung 84, durch die Druckmittelleitung 34 und durch die Druckmittelleitung 36 mit dem Druckmittelvorratsbehälter 38 pneumatisch verbunden ist. Eine Ansteuerung des Anhängersteuerventils 78 ist in bekannter Weise möglich und wird durch die Erfindung nicht beeinträchtigt.

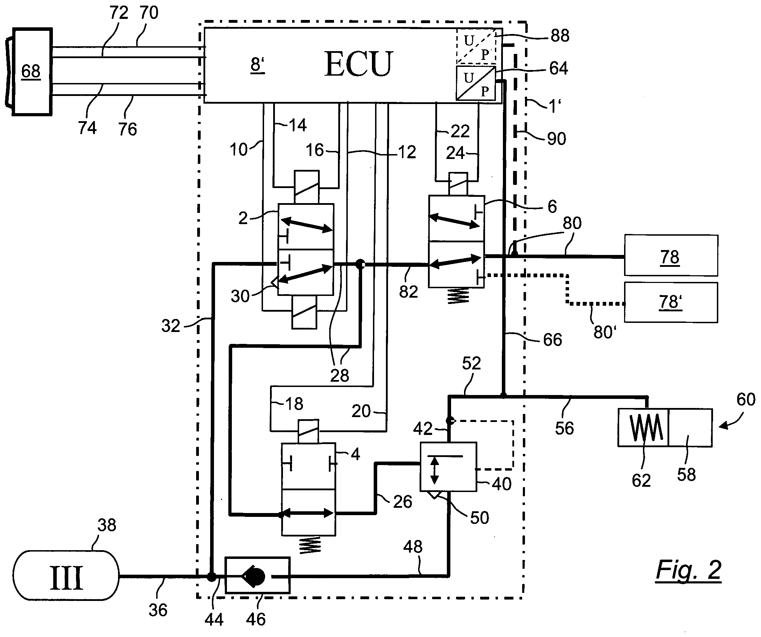

Fig. 2 zeigt eine Feststellbremseinrichtung 1' gemäß einem zweiten Ausführungsbeispiel der Erfindung. Die Feststellbremseinrichtung 1' gleicht teilweise der Feststellbremseinrichtung 1 von Fig. 1. Insbesondere bezeichnen gleiche Bezugsziffern gleiche bzw. ähnliche Bauteile. Das zweite Ausführungsbeispiel unterscheidet sich insbesondere durch die Ansteuerung des Anhängersteuerventils 78 bzw. eines Anhängersteuerventils 78' von dem ersten Ausführungsbeispiel.

Die Druckmittelleitung 80 ist eine vierte Druckmittelleitung, welche analog zum ersten Ausführungsbeispiel im unbestromten Zustand des dritten Ventils 6 mit der Druckmittelleitung 82 pneumatisch verbunden ist. Die Druckmittelleitung 82 ist jedoch nunmehr im Gegensatz zum ersten Ausführungsbeispiel nicht mit den Druckmittelleitungen 52 und 42 bzw. einem Ausgang des Relaisventils 40 sondern mit der zweiten Druckmittelleitung 28 ohne Zwischenschaltung des zweiten Ventils 4 pneumatisch verbunden. Im bestromten Zustand sperrt das dritte Ventil 6 die vierte Druckmittelleitung 80 gegen die Druckmittelleitung 82 ab. Die vierte Druckmittelleitung 80 ist hierbei nicht wie bei dem ersten Ausführungsbeispiel pneumatisch mit dem Druckluftvorratsbehälter 38 verbunden, sondern auch gegen diesen Druckluftvorratsbehälter 38 abgesperrt. Aus diesen Unterschieden zum ersten Ausführungsbeispiel ergibt sich ein unterschiedliches Schaltverhalten und somit die Notwendigkeit, anstelle der Steuereinrichtung 8 eine abweichend schaltende Steuereinrichtung 8' vorzusehen.

Das dritte Ventil 6 kann bspw. parallel mit dem zweiten Ventil 4 angesteuert werden, wodurch sich die Feststellbremse synchron für das Zugfahrzeug und ein an das Zugfahrzeug angekoppeltes Anhängefahrzeug einlegen bzw. lösen lässt.

Ein optionales Drucksensiermittel 88 ist durch eine Druckmittelleitung 90 mit der vierten Druckmittelleitung 80 pneumatisch verbunden. Mittels des Drucksensiermittels 88 kann somit der dem Anhängersteuerventil 78 bereitgestellte Druck überwacht werden. Sobald dieser Druck unter einen vorbestimmten Grenzwert, insbesondere in dem zweiten Zustand der Feststellbremseinrichtung 1', in welchem das dritte Ventil 6 bestromt ist, fällt, kann der Druck in der vierten Druckmittelleitung 80 durch zeitweiliges Schalten des dritten Ventils in seinen unbestromten Schaltzustand wieder erhöht werden, wenn zuvor die Feststellbremseinrichtung 1' in den vierten Zustand geschaltet und damit die zweite Druckmittelleitung 28 mit Vorratsdruck beaufschlagt wurde. Nach dem Abschalten des dritten Ventils 6 wird die Feststellbremseinrichtung 1' wieder in den dritten Zustand zurückgeschaltet.

Alternativ zu der Druckmittelleitung 80 und dem Anhängersteuerventil 78 kann eine Druckmittelleitung 80' als fünfte Druckmittelleitung und das Anhängersteuerventil 78' anstelle des Anhängersteuerventils 78 vorgesehen sein. Das Anhängersteuerventil 78' ist hierbei im bestromten Zustand des dritten Ventils 6 pneumatisch mit der Druckmittelleitung 82 verbunden, während es im unbestromten Zustand des dritten Ventils 6 von dieser Druckmittelleitung 82 abgesperrt ist. Das Drucksensiermittel 88 und die Druckmittelleitung 90 können entfallen. Alternativ kann das Drucksensiermittel 88 jedoch auch mittels der Druckmittelleitung 90 mit der fünften Druckmittelleitung 80' pneumatisch verbunden sein.

Um Energie zu sparen, wird das dritte Ventil 6 in dieser Variante des zweiten Ausführungsbeispiels im Falle der gelösten Feststellbremse während der Fahrt nur zeitweilig bestromt, um dem Anhängersteuerventil 78' einen ausreichenden Druck bereitstellen zu können. Für einen Großteil der Zeit bleibt das dritte Ventil 6 jedoch im Falle der eingelegten Feststellbremse unbestromt.

Wenn die Feststellbremse eingelegt wird bzw. sich für das Zugfahrzeug durch eine Unterbrechung der elektrischen Verbindung zur Energieversorgungseinrichtung selbsttätig einlegt, wird der Druck in der fünften Druckluftleitung 80' gehalten, so dass die Feststellbremse am Anhängefahrzeug gelöst bleibt, bspw. um einem Einfrieren von Bremsen an dem Anhängefahrzeug entgegenzuwirken.

Ggf. können sowohl die Druckmittelleitung 80 als auch die Druckmittelleitung 80' beide zumindest ansatzweise vorhanden sein, wobei entweder die Druckmittelleitung 80 mit dem Anhängersteuerventil 78 verbunden und die Druckmittelleitung 80' abgesperrt ist oder alternativ die Druckmittelleitung 80' mit dem Anhängersteuerventil 78' verbunden und die Druckmittelleitung 80 abgesperrt ist. Somit können diese beiden Varianten baulich weitestgehend gleich und somit kostengünstig hergestellt werden, wobei lediglich die Steuereinrichtung 8' bspw. mittels einer unterschiedlichen bzw. unterschiedlich eingerichteten Steuersoftware eine für beide Varianten unterschiedliche Ansteuerung insbesondere des dritten Ventils 6 ermöglicht.

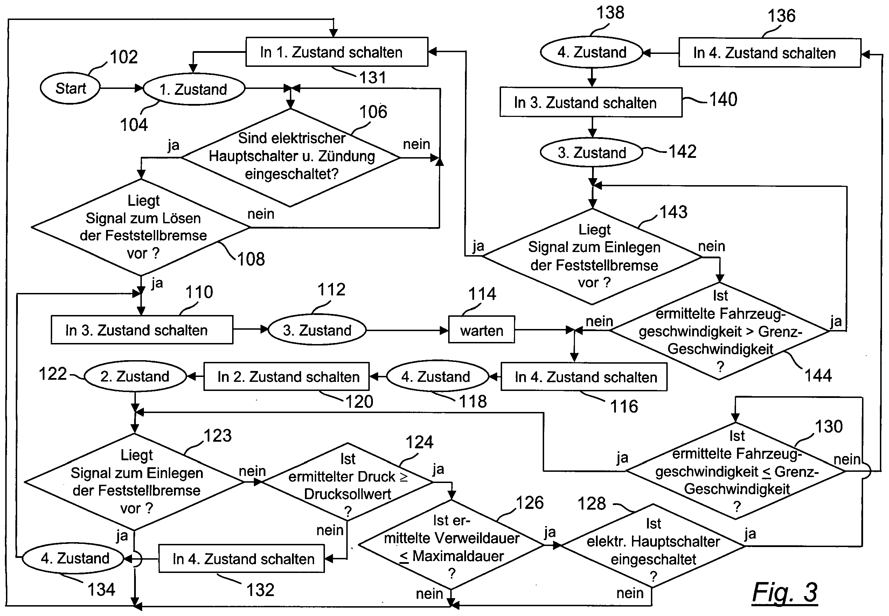

Fig. 3 zeigt ein Flussdiagramm zur Verdeutlichung von Schaltvorgängen bzw. Verfahrensschritten, welche mittels der Feststellbremseinrichtung 1 bzw. 1' gemäß den Ausführungsbeispielen 1 und 2 bzw. von dem erfindungsgemäßen Verfahren bereitgestellt werden.

Zum Beladen bzw. Entladen eines die Feststellbremseinrichtung 1 bzw. 1' aufweisenden Gefahrgutfahrzeugs ist diese mittels eines elektrischen Hauptschalters stromlos geschaltet. Dieser Hauptschalter kann außerhalb einer Fahrerkabine des Fahrzeugs angeordnet sein. Ggf. kann ein zusätzlicher elektrischer Hauptschalter, mittels welchem alternativ die elektrische Verbindung zur Feststellbremseinrichtung 1 bzw. 1' und zu weiteren elektrischen Systemen des Fahrzeugs unterbrochen werden kann, in der Fahrerkabine angeordnet sein. Durch das Stromlosschalten der Feststellbremseinrichtung 1 bzw. 1' sowie anderer elektrischer Systeme des Fahrzeugs wird einer Entzündung des Gefahrguts, bspw. mittels eines elektrischen Zündfunkens, entgegengewirkt.

Sobald der Hauptschalter und die Fahrzeugzündung betätigt sind und damit die Feststellbremseinrichtung 1 bzw. 1' mit elektrischer Energie versorgt wird, erfolgt ein Start des in der Figur dargestellten Ablaufs in einem Schritt 102. Die Feststellbremse bleibt auch bei eingelegtem Hauptschalter eingelegt bzw. es liegt in Schritt 104 der erste Zustand vor. Hiernach wird in Schritt 106 wiederholt abgefragt, ob nicht nur die Feststellbremseinrichtung 1 bzw. 1' mit elektrischer Energie versorgt wird, sondern auch eine Zündung eingeschaltet ist. Wenn sowohl der Hauptschalter als auch die Zündung eingeschaltet sind, wird in Schritt 108 zusätzlich abgefragt, ob ein Signal zum Lösen der Feststellbremse vorliegt. Wenn dieses Signal nicht vorliegt, folgt wiederum Schritt 106.

Sobald bspw. ein Schaltelement zum Einlegen der Feststellbremse betätigt ist bzw. ein Signal zum Lösen der Feststellbremse vorliegt, schaltet die Feststellbremseinrichtung 1 bzw. 1' dem Schritt 108 folgend in einem Schritt 110 in den dritten Zustand der Feststellbremseinrichtung 1 bzw. 1', welcher nachfolgend in einem Schritt 112 vorliegt.

In dem dritten Zustand 112 ist bzw. wird die erste Druckmittelleitung 26 belüftet. In einem Schritt 114 wird deshalb eine Zeit lang gewartet, so dass sich ein Druck in der ersten Druckmittelleitung 26 aufbauen und der Federspeicherteil 58 belüftet bzw. die Feststellbremse gelöst werden kann. Erst hiernach schaltet die Feststellbremseinrichtung 1 bzw. 1' in einem Schritt 116 in den vierten Zustand, um die erste Druckmittelleitung 26 gegen die zweite Druckmittelleitung 28 abzusperren und damit ein Entlüften der Federspeicherteile 58 bzw. Einlegen der Feststellbremse zu verhindern. Der vierte Zustand gemäß einem Schritt 118 liegt jedoch nur kurze Zeit vor, bis die Feststellbremseinrichtung 1 bzw. 1' dem Schritt 118 folgend in einem Schritt 120, welcher nachfolgend in einem Schritt 122 vorliegt, in den zweiten Zustand schaltet bzw. "scharfschaltet".

Ggf. können alternativ die Schritte 116 und 118 auch entfallen, wobei die Feststellbremseinrichtung 1 bzw. 1' direkt von dem dritten Zustand 112 in den zweiten Zustand 122 schaltet.

Die Feststellbremseinrichtung 1 bzw. 1' behält solange den zweiten Zustand 122 bei, d.h. bleibt solange "scharfgeschaltet" wie gemäß einem Schritt 123 kein Signal zum Lösen der Feststellbremse vorliegt sowie Bedingungen gemäß Schritten 124, 126, 128 und 130 erfüllt sind, wobei zumindest die Schritte 123, 124, 126 und 130 nacheinander ggf. wiederholt durchlaufen werden können. Die Schritte 123, 124, 126, 128 und 130 können alternativ beliebig untereinander vertauscht angeordnet sein. Ggf. kann der Schritt 124 und/oder 126 entfallen.

Gemäß dem Schritt 123 fragt die Feststellbremseinrichtung 1 bzw. 1' ab, ob ein Signal zum Einlegen der Feststellbremse vorliegt, wobei dieses Signal bspw. mittels einer Betätigung eines hierfür vorgesehenen Bedienelements erzeugt werden kann. Wenn dieses Signal vorliegt, schaltet die Feststellbremseinrichtung 1 bzw. 1' in einem Schritt 131 in den ersten Zustand bzw. legt die Feststellbremse ein. Andernfalls wird mit der Abfrage gemäß dem Schritt 124 fortgefahren.

In dem Schritt 124 vergleicht die Feststelleinrichtung 1 bzw. 1' einen, insbesondere mittels des Drucksensiermittels 64, ermittelten Druck mit einem vorgegebenen bzw. vorgebbaren Drucksollwert. Wenn der ermittelte Druck den Drucksollwert unterschreitet, schaltet die Feststellbremseinrichtung 1 bzw. 1' in einem Schritt 132 in den vierten Zustand, welcher nachfolgend in einem Schritt 134 kurzzeitig vorliegt, bevor mit Schritt 110 bzw. dem Schalten in den dritten Zustand fortgefahren wird.

Wenn die Abfrage in Schritt 126 ergibt, dass der zweite Zustand 122 bereits länger als eine vorgegebene Maximaldauer vorliegt, so schaltet die Feststellbremseinrichtung 1 bzw. 1' im Schritt 131 in den ersten Zustand bzw. legt die Feststellbremse ein. Hiernach wird mit Schritt 104 fortgefahren. Auch wenn gemäß Schritt 128 der Hauptschalter nicht mehr eingeschaltet ist bzw. die elektrische Verbindung zur Feststellbremseinrichtung 1 bzw. 1' unterbrochen wurde, schaltet die Feststellbremseinrichtung 1 bzw. 1' im Schritt 131 in den ersten Zustand bzw. legt die Feststellbremse ein. Im Gegensatz zu den Schritten 124, 126 und 130, welche elektronische Abfragen und Schaltvorgänge umfassen, veranschaulicht der Schritt 128 das selbsttätige, insbesondere stromlose, Schalten in den ersten Zustand 104 bzw. das Einlegen der Feststellbremse, wenn in dem Fall, dass der zweite Zustand 122 vorliegt, die Feststellbremseinrichtung 1 bzw. 1' nicht mehr mit elektrischer Energie versorgt wird. Deshalb wird Schritt 131 erreicht, sobald die elektrische Energieversorgung der Feststellbremseinrichtung 1 bzw. 1' nicht mehr gegeben ist, unabhängig davon, ob gerade eine elektronische Abfrage gemäß einem der Schritte 124, 126 oder 130 durchgeführt wird bzw. wurde.

Sofern die Feststellbremseinrichtung 1 bzw. 1' in dem Schritt 130 ermittelt, dass sich das Fahrzeug mit einer Geschwindigkeit bewegt, welche die vorgegebene Grenzgeschwindigkeit überschreitet, fährt die Feststellbremseinrichtung 1 bzw. 1' mit einem Schritt 136 fort, in welchem sie in den vierten Zustand schaltet, der nachfolgend in einem Schritt 138 kurzzeitig vorliegt, bis nach einem Schalten in den dritten Zustand in einem Schritt 140 in einem Schritt 142 der dritte Zustand vorliegt bzw. die Feststellbremse gelöst ist.

Nachfolgend fragt die Feststellbremseinrichtung 1 bzw. 1' ggf. wiederholt ab, ob gemäß einer Abfrage in einem Schritt 143 ein Signal zum Lösen der Feststellbremse vorliegt und ob gemäß einer Abfrage in einem Schritt 144 die ermittelte Fahrzeuggeschwindigkeit die vorgegebene Grenzgeschwindigkeit überschreitet. Wenn die Feststellbremseinrichtung gemäß dem Schritt 143 ermittelt, dass ein Signal zum Einlegen der Feststellbremse vorliegt und ggf. Bedingungen gemäß weiterer in der Figur 3 nicht dargestellter Abfragen erfüllt werden, schaltet die Feststellbremseinrichtung 1 bzw. 1' in dem Schritt 131 in den ersten Zustand. Sobald die Feststellbremseinrichtung 1 bzw. 1' in dem Schritt 144 ermittelt, dass die ermittelte Fahrzeuggeschwindigkeit die Grenzgeschwindigkeit unterschreitet bzw. nicht mehr übersteigt, fährt die Feststellbremseinrichtung 1 bzw. 1' mit dem Schritt 116 fort bzw. schaltet in den vierten Zustand.

Bezogen auf das zweite Ausführungsbeispiel gemäß Fig. 2 ergeben sich in dem Fall, dass die vierte Druckmittelleitung 80 zum Anschluss des Anhängersteuerventils 78 vorgesehen ist, folgende Schaltvorgänge bezogen auf das dritte Ventil 6: Während der dritte Zustand 110 bzw. 142 vorliegt, ist das dritte Ventil 6 unbestromt. Sobald das Fahrzeug zum Stillstand kommt bzw. die ermittelte Fahrzeuggeschwindigkeit die Grenzgeschwindigkeit nicht mehr übersteigt, schaltet die Feststellbremseinrichtung 1' in Schritt 116 in den bestromten Schaltzustand des Ventils 6, welcher über das Schalten in den zweiten Zustand in Schritt 120 hinaus auch in dem Schritt 122 bzw. während der zweite Zustand vorliegt, beibehalten wird. In Schritt 136 schaltet die Feststellbremseinrichtung 1' das dritte Ventil 6 in den unbestromten Schaltzustand, welcher beibehalten wird, solange gemäß Schritt 104 der erste Zustand vorliegt.

Zum Lösen der Feststellbremse schaltet die Feststellbremseinrichtung 1' in den dritten Zustand 112 und bestromt in dem Schritt 116 zum Einsperren des Drucks in der vierten Druckmittelleitung 80 das dritte Ventil 6. Sobald das Fahrzeug sich in Bewegung setzt bzw. die ermittelte Fahrzeuggeschwindigkeit gemäß Schritt 130 die Grenzgeschwindigkeit überschreitet, schaltet die Feststellbremseinrichtung 1' zunächst in Schritt 136 in den vierten Zustand und hiernach in Schritt 140 in den dritten Zustand, wobei in diesem Schritt 140 das dritte Ventil 6 stromlos geschaltet wird.

Für die hiervon abweichende Variante mit der fünften Druckluftleitung 80', welche mit dem Anhängersteuerventil 78' verbindbar ist, ergibt sich folgendes Schaltverhalten bzw. folgender Verfahrensablauf: Während der Fahrt bzw. während der dritte Zustand 142 vorliegt, ist das dritte Ventil 6 zeitweise unbestromt und zeitweise bestromt. Insbesondere kann in dem Fall, dass das dritte Ventil 6 während der Fahrt unbestromt ist, ein Druckabfall in der fünften Duckmittelleitung 80' ermittelt und in Erwiderung hierauf der dritte oder vierte Zustand 142 bzw. 118 eingenommen und das dritte Ventil 6 bestromt werden. Während der zweite Zustand 122 vorliegt und ggf. auch schon während der vierte Zustand 118 vorliegt, ist das dritte Ventil 6 durchgängig unbestromt. Hieran ändert sich auch beim Schalten in den ersten Zustand in Schritt 131 nichts, so dass auch dann, wenn der erste Zustand 104 vorliegt, der Druck über die fünfte Druckmittelleitung 80' zu dem Anhängersteuerventil 78' eingesperrt und somit das Anhängefahrzeug ungebremst bleibt.

Beim Lösen der Feststellbremse wird nach Schritt 112 das dritte Ventil 6 kurzzeitig bestromt, so dass der Druck in der fünften Druckmittelleitung 80' in dem Fall, dass er bspw. aufgrund eines Lecks unter den Vorratsdruck abgefallen ist, ansteigen kann und in jedem Fall sichergestellt ist, dass auch die Feststellbremse am Anhängefahrzeug gelöst ist bzw. wird.

## Patentansprüche

1. Verfahren zum Betrieb einer zum elektropneumatischen oder elektrohydraulischen Feststellen eines Fahrzeugs vorgesehenen Feststellbremseinrichtung (1, 1'), wobei eine erste Druckmittelleitung (26) ein Druckmittel mit einem Druck führt, welcher pneumatisch bzw. hydraulisch einem Bremszylinder (60), insbesondere Federspeicherbremszylinder (60), bereitstellbar ist, wobei in einem ersten Zustand dieser Druck in der ersten Druckmittelleitung (26) zum Betätigen des Bremszylinders (60) bis zu einem Minimaldruck, insbesondere Umgebungsluftdruck, absinkt und wobei die Feststellbremseinrichtung (1, 1') mit elektrischer Energie einer Energieversorgungseinrichtung versorgt wird, wobei
sich in einem zweiten Zustand (122) ein jeweiliger Druck in der ersten Druckmittelleitung (26) hält, wobei die Feststellbremseinrichtung (1, 1') im Falle eines Stillstands des Fahrzeugs und gleichzeitig gelöster Feststellbremse diesen zweiten Zustand (122) einnimmt und in dem Fall, dass bei Vorliegen des zweiten Zustands (122) die elektrische Energieversorgung unterbrochen wird, den ersten Zustand (104) einnimmt und dadurch die Feststellbremse eingelegt wird, wobei die Feststellbremseinrichtung (1, 1') in einem dritten Zustand (112, 142) den Druck in der ersten Druckmittelleitung (26) zum Lösen des Bremszylinders bis zu einem Maximaldruck, insbesondere Vorratsdruck, erhöht und die Feststellbremseinrichtung (1, 1') in dem Fall, dass der dritte Zustand (142) vorliegt und eine detektierte Fahrzeuggeschwindigkeit unter eine Grenzgeschwindigkeit absinkt oder ein Fahrzeugstillstand erreicht wird, von dem dritten Zustand (142) direkt oder unter Zwischenschaltung eines weiteren Zustands in den zweiten Zustand (122) schaltet, **dadurch gekennzeichnet, dass**
die Feststellbremseinrichtung (1, 1') im ersten Zustand einen Druck in der ersten Druckmittelleitung (26) durch eine zweite Druckmittelleitung (28) bis zu dem Minimaldruck absenkt und im dritten Zustand diesen Druck durch die zweite Druckmittelleitung (28) bis zu dem Maximaldruck erhöht, wobei die Feststellbremseinrichtung (1, 1') in dem Fall, dass der dritte Zustand (112, 142) vorliegt, zum Schalten in den zweiten Zustand (122) zunächst in einen vierten Zustand (118) und erst hiernach in den zweiten Zustand (122) schaltet und wobei in dem vierten Zustand (118) zum Halten des Drucks in der ersten Druckmittelleitung (26) die zweite Druckmittelleitung (28) gegen die erste Druckmittelleitung (26) abgesperrt ist und die zweite Druckmittelleitung (28) mit einem Druckvorratsbehälter (38) verbunden ist, wobei in dem zweiten Zustand die zweite Druckmittelleitung (28) gegen die erste Druckmittelleitung (26) abgesperrt ist und die zweite Druckmittelleitung (28) mit einem Druckmittelausgang (30) verbunden ist.

2. Verfahren nach Anspruch 1, **dadurch gekennzeichnet, dass** die Feststellbremseinrichtung (1, 1') in dem Fall, dass der zweite Zustand (122) vorliegt, in Erwiderung auf ein Ansteigen der Fahrzeuggeschwindigkeit auf bzw. über einen vorgegebenen Grenzwert oder in Erwiderung auf ein Anfahren des Fahrzeugs zunächst in den vierten Zustand (136) und hiernach in den dritten Zustand (142) schaltet und wobei in dem vierten Zustand (136) zum Halten des Drucks in der ersten Druckmittelleitung (26) die zweite Druckmittelleitung (28) gegen die erste Druckmittelleitung (26) abgesperrt ist.

3. Verfahren nach Anspruch 1 oder 2, **dadurch gekennzeichnet, dass** die Feststellbremseinrichtung (1, 1') in dem Fall, dass der erste Zustand (104) vorliegt und eine Zündung eingeschaltet ist, in Erwiderung auf ein einen Wunsch zum Lösen der Feststellbremse repräsentierendes Signal zunächst in den dritten Zustand (112) schaltet und hiernach, insbesondere nachdem sich die Drücke in der ersten Druckmittelleitung (26) und in der zweiten Druckmittelleitung (28) angeglichen haben, in den vierten Zustand (118) und nachfolgend in den zweiten Zustand (122) schaltet.

4. Verfahren nach einem der Ansprüche 1 bis 3, **dadurch gekennzeichnet, dass** ein Drucksensiermittel (64) einen Druck in der ersten Druckmittelleitung (26) bzw. einen nach Maßgabe dieses Drucks ausgesteuerten Druck ermittelt und die Feststellbremseinrichtung (1, 1') in dem Fall, dass der zweite Zustand (122) vorliegt, in Erwiderung auf ein Abfallen des ermittelten Drucks unter einen vorgegebenen Drucksollwert in den vierten Zustand (132) schaltet, hiernach in den dritten Zustand (110) schaltet und nach Erreichen des Drucksollwertes oder eines höheren Wertes oder nach einer vorgegebenen Zeitdauer wieder in den vierten Zustand (118) und hiernach schließlich in den zweiten Zustand (122) zurückschaltet.

5. Verfahren nach einem der Ansprüche 1 bis 4, **dadurch gekennzeichnet, dass** in dem ersten Zustand (104) ein erstes Ventil (2), insbesondere 3/2-Wege-Bistabil-Magnetventil, sich in einem ersten Schaltzustand befindet, ein zweites Ventil (4), insbesondere 2/2-Wege-Magnetventil, unbestromt ist und die erste Druckmittelleitung (26) durch das zweite Ventil (4), durch die zweite Druckmittelleitung (28) und durch das erste Ventil (2) pneumatisch bzw. hydraulisch mit einem Druckmittelausgang (30) verbunden ist und dass im zweiten Zustand (122) das erste Ventil (2) sich in seinem ersten Schaltzustand befindet, das zweite Ventil (4) bestromt ist und die erste Druckmittelleitung (26) mittels des zweiten Ventils (4) von der zweiten Druckmittelleitung (28) abgesperrt ist und die zweite Druckmittelleitung (28) durch das erste Ventil (2) pneumatisch bzw. hydraulisch mit dem Druckmittelausgang (30) verbunden ist
und dass in dem dritten Zustand (112, 142) das erste Ventil (2) sich in seinem zweiten Schaltzustand befindet, das zweite Ventil (4) unbestromt ist und die erste Druckmittelleitung (26) durch das zweite Ventil (4), durch die zweite Druckmittelleitung (28) und durch das erste Ventil (2) pneumatisch bzw. hydraulisch mit einer dritten, zu einem Druckmittelvorrat (38) führenden Druckmittelleitung (32) verbunden ist
und dass in dem vierten Zustand (118, 134, 138) das erste Ventil (2) sich in seinem zweiten Schaltzustand befindet, das zweite Ventil (4) bestromt ist und die erste Druckmittelleitung (26) mittels des zweiten Ventils (4) von der zweiten Druckmittelleitung (28) abgesperrt ist und diese zweite Druckmittelleitung (28) durch das erste Ventil (2) pneumatisch bzw. hydraulisch mit der dritten Druckmittelleitung (32) verbunden ist.

6. Feststellbremseinrichtung zum elektropneumatischen oder elektrohydraulischen Feststellen eines Fahrzeugs, wobei diese Feststellbremseinrichtung (1, 1') eine erste Druckmittelleitung (26) aufweist, in welcher ein Druckmittel mit einem Druck führbar ist, welcher pneumatisch bzw. hydraulisch wenigstens einem Bremszylinder (60), insbesondere Federspeicherbremszylinder (60), bereitstellbar ist, wobei diese Feststellbremseinrichtung (1, 1') einen ersten Zustand (104) aufweist, in welchem der Druck in der ersten Druckmittelleitung (26) zum Betätigen des Bremszylinders (60) bis zu einem Minimaldruck, insbesondere Umgebungsluftdruck, absenkbar ist, und wobei diese Feststellbremseinrichtung (1, 1') mittels elektrischer Energie einer Energieversorgungseinrichtung versorgbar ist, wobei in einem zweiten Zustand (122) ein jeweiliger Druck in der ersten Druckmittelleitung (26) haltbar ist, wobei die Feststellbremseinrichtung (1, 1') derart ausgebildet ist, dass sie im Falle eines Stillstands des Fahrzeugs und gleichzeitig gelöster Feststellbremse den zweiten Zustand (122) einnimmt und in dem Fall, dass bei Vorliegen des zweiten Zustands (122) die elektrische Energieversorgung unterbrochen wird, den ersten Zustand (104) einnimmt und dadurch die Feststellbremse einlegbar ist, wobeiin einem dritten Zustand (112, 142) ein Druck in der ersten Druckmittelleitung (26) zum Lösen des Bremszylinders (60) bis zu einem Maximaldruck, insbesondere Vorratsdruck, erhöhbar ist, wobei die Feststellbremseinrichtung derart ausgebildet ist, dass sie in dem Fall, dass der dritte Zustand (142) vorliegt, in Erwiderung auf ein Absinken einer detektierten Fahrzeuggeschwindigkeit unter eine Grenzgeschwindigkeit oder in Erwiderung auf ein Erreichen eines Fahrzeugstillstands von dem dritten Zustand (142) direkt oder unter Zwischenschaltung eines weiteren Zustands in den zweiten Zustand (122) schaltbar ist, **gekennzeichnet durch**
a) eine zweite Druckmittelleitung (28), durch welche ein Druck in der ersten Druckmittelleitung (26) in dem ersten Zustand (104) bis zu dem Minimaldruck absenkbar und in dem dritten Zustand (112, 142) bis zu dem Maximaldruck erhöhbar ist und
b) einen vierten Zustand (118, 134, 136), in welchem zum Halten des Drucks in der ersten Druckmittelleitung (26) die zweite Druckmittelleitung (28) gegen die erste Druckmittelleitung (26) abgesperrt ist und die zweite Druckmittelleitung (28) mit einem Druckvorratsbehälter (38) verbunden ist,
c) wobei in dem zweiten Zustand die zweite Druckmittelleitung (28) gegen die erste Druckmittelleitung (26) abgesperrt ist und die zweite Druckmittelleitung (28) mit einem Druckmittelausgang (30) verbunden ist,
wobei die Feststellbremseinrichtung (1, 1') derart ausgebildet ist, dass sie in dem Fall, dass der dritte Zustand (112, 142) vorliegt, zunächst in den vierten Zustand (118) und erst hiernach in den zweiten Zustand (122) schaltbar ist.

7. Feststellbremseinrichtung nach Anspruch 6, **dadurch gekennzeichnet, dass** die Feststellbremseinrichtung (1, 1') derart ausgebildet ist, dass sie in dem Fall, dass der zweite Zustand (122) vorliegt, in Erwiderung auf ein Ansteigen der Fahrzeuggeschwindigkeit auf bzw. über den bzw. einen vorgegebenen Grenzwert oder in Erwiderung auf ein Anfahren des Fahrzeugs zunächst in den vierten Zustand (136) und hiernach in den dritten Zustand (142) schaltbar ist.

8. Feststellbremseinrichtung nach Anspruch 6 oder 7, **dadurch gekennzeichnet, dass** die Feststellbremseinrichtung (1, 1') derart ausgebildet ist, dass sie in dem Fall, dass der erste Zustand (104) vorliegt und eine Zündung eingeschaltet ist, in Erwiderung auf ein einen Wunsch zum Lösen der Feststellbremse repräsentierendes Signal zunächst in den dritten Zustand (112) schaltet und hiernach, insbesondere nachdem sich die Drücke in der ersten Druckmittelleitung (26) und der zweiten Druckmittelleitung (32) angeglichen haben, in den vierten Zustand (118) und nachfolgend in den zweiten Zustand (122) schaltet.

9. Feststellbremseinrichtung nach einem der Ansprüche 6 bis 8, **gekennzeichnet durch** ein Drucksensiermittel (64) mittels dem der Druck in der ersten Druckmittelleitung (26) bzw. ein nach Maßgabe dieses Drucks ausgesteuerter Druck ermittelbar ist, wobei die Feststellbremseinrichtung (1, 1') derart ausgebildet ist, dass sie in dem Fall, dass der zweite Zustand (122) vorliegt, in Erwiderung auf ein Abfallen des ermittelten Drucks unter einen vorgegebenen Drucksollwert in den vierten Zustand (132) schaltet, hiernach in den dritten Zustand (110) schaltet und nach Erreichen des Drucksollwertes oder eines höheren Wertes oder nach einer vorgegebenen Zeitdauer wieder in den vierten Zustand (118) und hiernach schließlich in den zweiten Zustand (122) zurückschaltet.

10. Feststellbremseinrichtung nach einem der Ansprüche 6 bis 9, **gekennzeichnet durch** ein erstes Ventil (2), insbesondere 3/2-Wege-Bistabilmagnetventil, ein zweites Ventil (4), insbesondere 2/2-Wege-Magnetventil, eine dritte Druckmittelleitung (32), welche mit einem Druckmittelvorrat (38) verbindbar ist, und einen Druckmittelausgang (30), durch welchen Druckmittel mittels des ersten Ventils (2) zur Verringerung eines Druckes in der zweiten Druckmittelleitung (28) ablassbar ist,
wobei im ersten Zustand (104) die erste Druckmittelleitung (26) durch das unbestromte zweite Ventil (4), durch die zweite Druckmittelleitung (28) und durch das in seinem ersten Schaltzustand befindliche erste Ventil (2) pneumatisch bzw. hydraulisch mit dem Druckmittelausgang (30) verbindbar ist,
wobei im zweiten Zustand (122) die erste Druckmittelleitung (26) mittels des bestromten zweiten Ventils (4) von der zweiten Druckmittelleitung (28) absperrbar ist und die zweite Druckmittelleitung (28) durch das in seinem ersten Schaltzustand befindliche erste Ventil (2) pneumatisch bzw. hydraulisch mit dem Druckmittelausgang (30) verbindbar ist,
wobei im dritten Zustand (112, 142) die erste Druckmittelleitung (26) durch das unbestromte zweite Ventil (4), durch die zweite Druckmittelleitung (28) und durch das in seinem zweiten Schaltzustand befindliche erste Ventil (2) pneumatisch bzw. hydraulisch mit der dritten Druckmittelleitung (32) verbindbar ist
und wobei in dem vierten Zustand (118, 134, 138) die erste Druckmittelleitung (26) mittels des bestromten zweiten Ventils (4) von der zweiten Druckmittelleitung (28) absperrbar ist und diese zweite Druckmittelleitung (28) durch das in seinem zweiten Schaltzustand befindliche erste Ventil (2) pneumatisch bzw. hydraulisch mit der dritten Druckmittelleitung (32) verbindbar ist.

11. Bremsanlage, **dadurch gekennzeichnet, dass** diese Bremsanlage zur Durchführung des Verfahrens nach einem der Ansprüche 1 bis 5 ausgebildet ist oder eine Feststellbremseinrichtung (1, 1') nach einem der Ansprüche 6 bis 10 aufweist.

12. Fahrzeug, **dadurch gekennzeichnet, dass** dieses Fahrzeug zur Durchführung des Verfahrens nach einem der Ansprüche 1 bis 5 ausgebildet ist und/oder eine Feststellbremseinrichtung (1, 1') nach einem der Ansprüche 6 bis 10 und/oder eine Bremsanlage nach Anspruch 11 aufweist.

## Claims

1. Method for operating a parking brake device (1, 1') which is provided for fixing a vehicle electropneumatically or electrohydraulically, a first pressure medium line (26) conducting a pressure medium at a pressure, which pressure can be provided pneumatically or hydraulically to a brake cylinder (60), in particular a spring brake cylinder (60), the pressure dropping in a first state in the first pressure medium line (26) for actuating the brake cylinder (60) as far as a minimum pressure, in particular ambient air pressure, and the parking brake device (1, 1') being supplied with electric energy of an energy supply device, wherein, in a second state (122), a respective pressure stays on in the first pressure medium line (26), the parking brake device (1, 1') assuming the second state (122) in the case of a standstill of the vehicle and a simultaneously released parking brake, and, in the case where the second state (122) is present, the electric energy supply being interrupted, assuming the first state (104) and the parking brake being engaged as a result, wherein the parking brake device (1, 1'), in a third state (112, 142), increases the pressure in the first pressure medium line (26) for releasing the brake cylinder as far as a maximum pressure, in particular a supply pressure, and, in the case where the third state (142) is present and a detected vehicle speed drops below a limit speed or a vehicle standstill is reached, the parking brake device (1, 1') switching from the third state (142) directly or with intermediate switching of a further state into the second state (122), **characterized in that**, in the first state, the parking brake device (1, 1') lowers a pressure in the first pressure medium line (26) by way of a second pressure medium line (28) as far as the minimum pressure and, in the third state, increases said pressure by way of the second pressure medium line (28) as far as the maximum pressure, the parking brake device (1, 1'), in the case where the third state (112, 142) is present, switching, for switching into the second state (122), first of all into a fourth state (118) and only after this into the second state (122), and, in the fourth state (118) for holding the pressure in the first pressure medium line (26), the second pressure medium line (28) being shut off with respect to the first pressure medium line (26), and the second pressure medium line (28) being connected to a pressure reservoir (38), the second pressure medium line (28) being shut off with respect to the first pressure medium line (26) in the second state, and the second pressure medium line (28) being connected to a pressure medium outlet (30).

2. Method according to Claim 1, **characterized in that**, in the case where the second state (122) is present, the parking brake device (1, 1') switches first of all into the fourth state (136) and after this into the third state (142) in response to an increase of the vehicle speed to or above a predefined limit value or in response to the vehicle starting, and, in the fourth state (136) for holding the pressure in the first pressure medium line (26), the second pressure medium line (28) being shut off with respect to the first pressure medium line (26).

3. Method according to Claim 1 or 2, **characterized in that**, in the case where the first state (104) is present and an ignition is switched on, the parking brake device (1, 1') switches first of all into the third state (112) in response to a signal which represents a request for the release of the parking brake and, after this, in particular after the pressures in the first pressure medium line (26) and in the second pressure medium line (28) have equalized, switches into the fourth state (118) and subsequently into the second state (122).

4. Method according to one of Claims 1 to 3, **characterized in that** a pressure sensing means (64) determines a pressure in the first pressure medium line (26) or a pressure which is modulated in accordance with the said pressure, and, in the case where the second state (122) is present, the parking brake device (1, 1') switches into the fourth state (132) in response to a drop of the determined pressure below a predefined pressure setpoint value, after this switches into the third state (110), and, after the pressure setpoint value or a higher value has been reached or after a predefined time duration, switches into the fourth state (118) again and, after this, finally switches back into the second state (122).

5. Method according to one of Claims 1 to 4, **characterized in that**, in the first state (104), a first valve (2), in particular a 3/2-way bistable solenoid valve, is in a first switching state, a second valve (4), in particular a 2/2-way solenoid valve, is non-energized, and the first pressure medium line (26) is connected pneumatically or hydraulically to a pressure medium outlet (30) by way of the second valve (4), by way of the second pressure medium line (28) and by way of the first valve (2), and **in that**, in the second state (122), the first valve (2) is in its first switching state, the second valve (4) is energized, and the first pressure medium line (26) is shut off from the second pressure medium line (28) by means of the second valve (4), and the second pressure medium line (28) is connected pneumatically or hydraulically to the pressure medium outlet (30) by way of the first valve (2), and **in that**, in the third state (112, 142), the first valve (2) is in its second switching state, the second valve (4) is non-energized, and the first pressure medium line (26) is connected pneumatically or hydraulically by way of the second valve (4), by way of the second pressure medium line (28) and by way of the first valve (2) to a third pressure medium line (32) which leads to a pressure medium supply (38), and **in that**, in the fourth state (118, 134, 138), the first valve (2) is in its second switching state, the second valve (4) is energized, and the first pressure medium line (26) is shut off from the second pressure medium line (28) by means of the second valve (4), and the said second pressure medium line (28) is connected pneumatically or hydraulically to the third pressure medium line (32) by way of the first valve (2).

6. Parking brake device for fixing a vehicle electropneumatically or electrohydraulically, the parking brake device (1, 1') having a first pressure medium line (26), in which a pressure medium can be conducted at a pressure which can be provided pneumatically or hydraulically at least to a brake cylinder (60), in particular a spring brake cylinder (60), the said parking brake device (1, 1') having a first state (104), in which the pressure in the first pressure medium line (26) for actuating the brake cylinder (60) can be lowered as far as a minimum pressure, in particular ambient air pressure, and it being possible for the said parking brake device (1, 1') to be supplied by means of electric energy of an energy supply device, it being possible, in a second state (122), for a respective pressure to be held in the first pressure medium line (26), the parking brake device (1, 1') being configured in such a way that, in the case of a standstill of the vehicle and a simultaneously released parking brake, it assumes the second state (122), and, in the case where the electric energy supply is interrupted if the second state (122) is present, it assumes the first state (104) and the parking brake can be engaged as a result, it being possible, in a third state (112, 142), for a pressure in the first pressure medium line (26) for releasing the brake cylinder (60) to be increased as far as a maximum pressure, in particular a supply pressure, the parking brake device being configured in such a way that, in the case where the third state (142) is present, it switches from the third state (142) directly or with intermediate switching of a further state into the second state (122) in response to a drop of a detected vehicle speed below a limit speed or in response to a vehicle standstill being reached, **characterized by**
a) a second pressure medium line (28), by way of which a pressure in the first pressure medium line (26) can be lowered as far as the minimum pressure in the first state (104) and can be increased as far as the maximum pressure in the third state (112, 142), and
b) a fourth state (118, 134, 136), in which, in order to hold the pressure in the first pressure medium line (26), the second pressure medium line (28) is shut off with respect to the first pressure medium line (26), and the second pressure medium line (28) is connected to a pressure reservoir (38),
c) the second pressure medium line (28) being shut off with respect to the first pressure medium line (26) in the second state, and the second pressure medium line (28) being connected to a pressure medium outlet (30), the parking brake device (1, 1') being configured in such a way that, in the case where the third state (112, 142) is present, it can be switched first of all into the fourth state (118) and only after this into the second state (122).

7. Parking brake device according to Claim 6, **characterized in that** the parking brake device (1, 1') is configured in such a way that, in the case where the second state (122) is present, the parking brake device (1, 1') can be switched first of all into the fourth state (136) and after this into the third state (142) in response to an increase in the vehicle speed to or over the or a predefined limit value or in response to driving off of the vehicle.

8. Parking brake device according to Claim 6 or 7, **characterized in that** the parking brake device (1, 1') is configured in such a way that, in the case where the first state (104) is present and an ignition is switched on, it switches first of all into the third state (112) in response to a signal which represents a request for the release of the parking brake and, after this, in particular after the pressures in the first pressure medium line (26) and the second pressure medium line (32) have equalized, switches into the fourth state (118) and subsequently into the second state (122).

9. Parking brake device according to one of Claims 6 to 8, **characterized by** a pressure sensing means (64), by means of which the pressure in the first pressure medium line (26) or a pressure which is modulated in accordance with the said pressure can be determined, the parking brake device (1, 1') being configured in such a way that, in the case where the second state (122) is present, it switches into the fourth state (132) in response to a drop of the determined pressure below a predefined pressure setpoint value, after this switches into the third state (110), and, after the pressure setpoint value or a higher value has been reached or after a predefined time duration, switches into the fourth state (118) again and, after this, finally switches back into the second state (122).

10. Parking brake device according to one of Claims 6 to 9, **characterized by** a first valve (2), in particular a 3/2-way bistable solenoid valve, a second valve (4), in particular a 2/2-way solenoid valve, a third pressure medium line (32) which can be connected to a pressure medium supply (38), and a pressure medium outlet (30), by way of which pressure medium can be discharged by means of the first valve (2) in order to reduce pressure in the second pressure medium line (28), it being possible, in the first state (104), for the first pressure medium line (26) to be connected pneumatically or hydraulically to the pressure medium outlet (30) by way of the non-energized second valve (4), by way of the second pressure medium line (28), and by way of the first valve (2) which is in its first switching state, it being possible, in the second state (122), for the first pressure medium line (26) to be shut off from the second pressure medium line (28) by means of the energized second valve (4), and it being possible for the second pressure medium line (28) to be connected pneumatically or hydraulically to the pressure medium outlet (30) by way of the first valve (2) which is in its first switching state, it being possible, in the third state (112, 142), for the first pressure medium line (26) to be connected pneumatically or hydraulically to the third pressure medium line (32) by way of the non-energized second valve (4), by way of the second pressure medium line (28), and by way of the first valve (2) which is in its second switching state, and it being possible, in the fourth state (118, 134, 138), for the first pressure medium line (26) to be shut off from the second pressure medium line (28) by means of the energized second valve (4), and it being possible for the said second pressure medium line (28) to be connected pneumatically or hydraulically to the third pressure medium line (32) by way of the first valve (2) which is in its second switching state.

11. Brake system, **characterized in that** the brake system is configured for carrying out the method according to one of Claims 1 to 5 or comprises a parking brake device (1, 1') according to one of Claims 6 to 10.

12. Vehicle, **characterized in that** the vehicle is configured for carrying out the method according to one of Claims 1 to 5 and/or comprises a parking brake device (1, 1') according to one of Claims 6 to 10 and/or a brake system according to Claim 11.

## Revendications

1. Procédé permettant de faire fonctionner un dispositif de frein de stationnement (1, 1') destiné à immobiliser de manière électropneumatique ou électrohydraulique un véhicule, dans lequel une première conduite de fluide de pression (26) guide un fluide de pression à une pression qui peut être fournie de manière pneumatique, respectivement hydraulique, à un cylindre de frein (60), en particulier à un cylindre de frein à ressort accumulateur (60), dans lequel, dans un premier état, cette pression dans la première conduite de fluide de pression (26) diminue jusqu'à une pression minimale, en particulier jusqu'à la pression de l'air ambiant, pour l'actionnement du cylindre de frein (60), et dans lequel le dispositif de frein de stationnement (1, 1') est alimenté en énergie électrique d'un dispositif d'alimentation en énergie, dans lequel, dans un deuxième état (122), une pression respective se maintient dans la première conduite de fluide de pression (26), dans lequel le dispositif de frein de stationnement (1, 1'), dans le cas d'un arrêt du véhicule et en même temps dans le cas d'un frein de stationnement desserré, adopte ce deuxième état (122) et, dans le cas où l'alimentation en énergie électrique est interrompue en présence du deuxième état (122), adopte le premier état (104) et le frein de stationnement est par conséquent enclenché, dans lequel le dispositif de frein de stationnement (1, 1') augmente la pression dans la première conduite de fluide de pression (26) jusqu'à une pression maximale, en particulier une pression d'alimentation, dans un troisième état (112, 142) pour relâcher le cylindre de frein, et le dispositif de frein de stationnement (1, 1'), dans le cas où le troisième état (142) est présent et une vitesse de véhicule détectée tombe en dessous d'une vitesse limite ou un arrêt du véhicule est atteint, commute du troisième état (142) au deuxième état (122) directement ou par l'intermédiaire d'un autre état, **caractérisé en ce que**
le dispositif de frein de stationnement (1, 1'), dans le premier état, diminue une pression dans la première conduite de fluide de pression (26) jusqu'à la pression minimale par le biais d'une deuxième conduite de fluide de pression (28) et, dans le troisième état, augmente cette pression jusqu'à la pression maximale au moyen de la deuxième conduite de fluide de pression (28), le dispositif de frein de stationnement (1, 1'), dans le cas où le troisième état (112, 142) est présent, pour commuter dans le deuxième état (122), commute tout d'abord dans un quatrième état (118) et ensuite dans deuxième état (122) et, dans le quatrième état (118), pour maintenir la pression dans la première conduite de fluide de pression (26), la deuxième conduite de fluide de pression (28) étant bloquée vis-à-vis de la première conduite de fluide de pression (26) et la deuxième conduite de fluide de pression (28) étant reliée à un réservoir de pression (38) et, dans le deuxième état, la deuxième conduite de fluide de pression (28) étant bloquée vis-à-vis de la première conduite de fluide de pression (26) et la deuxième conduite de fluide de pression (28) étant reliée à une sortie de fluide de pression (30).

2. Procédé selon la revendication 1, **caractérisé en ce que** le dispositif de frein de stationnement (1, 1'), dans le cas où le deuxième état (122) est présent, en réponse à une augmentation de la vitesse du véhicule à une valeur limite prédéfinie, respectivement au-dessus de celle-ci, ou en réponse à un démarrage du véhicule, commute tout d'abord dans le quatrième état (136) et ensuite dans le troisième état (142) et, dans le quatrième état (136), pour maintenir la pression dans la première conduite de fluide de pression (26), la deuxième conduite de fluide de pression (28) étant bloquée vis-à-vis de la première conduite de fluide de pression (26).

3. Procédé selon la revendication 1 ou 2, **caractérisé en ce que** le dispositif de frein de stationnement (1, 1'), dans le cas où le premier état (104) est présent et où un allumage est activé, en réponse à un signal représentant un souhait de desserrage du frein de stationnement, commute tout d'abord dans le troisième état (112) et ensuite, en particulier après que les pressions dans la première conduite de fluide de pression (26) et dans la deuxième conduite de fluide de pression (28) se soient équilibrées, commute dans le quatrième état (118) puis dans le deuxième état (122).

4. Procédé selon l'une des revendications 1 à 3, **caractérisé en ce qu'**un moyen de détection de pression (64) détermine une pression dans la première conduite de fluide de pression (26), respectivement une pression commandée en fonction de cette pression, et le dispositif de frein de stationnement (1, 1'), dans le cas où le deuxième état (122) est présent, en réponse à une chute de la pression déterminée en dessous d'une valeur de consigne de pression prédéfinie, commute dans le quatrième état (132), commute ensuite dans le troisième état (110) et, une fois que la valeur de consigne de pression ou une valeur plus élevée a été atteinte ou après une durée prédéfinie, commute à nouveau dans le quatrième état (118) et ensuite finalement dans le deuxième état (122).

5. Procédé selon l'une des revendications 1 à 4, **caractérisé**
**en ce que**, dans le premier état (104), une première vanne (2), en particulier une électrovanne bistable à 3/2 voies, se trouve dans un premier état de commutation, une deuxième vanne (4), en particulier une électrovanne à 2/2 voies, n'est pas alimentée en courant électrique et la première conduite de fluide de pression (26) est reliée de manière pneumatique, respectivement hydraulique, à une sortie de fluide de pression (30) au moyen de la deuxième vanne (4), au moyen de la deuxième conduite de fluide de pression (28) et au moyen de la première vanne (2),
et **en ce que**, dans le deuxième état (122), la première vanne (2) se trouve dans son premier état de commutation, la deuxième vanne (4) n'est pas alimentée en courant électrique et la première conduite de fluide de pression (26) est bloquée par rapport à la deuxième conduite de fluide de pression (28) au moyen de la deuxième vanne (4) et la deuxième conduite de fluide de pression (28) est reliée de manière pneumatique, respectivement hydraulique, à la sortie de fluide de pression (30) au moyen de la première vanne (2),
et **en ce que**, dans le troisième état (112, 142), la première vanne (2) se trouve dans son deuxième état de commutation, la deuxième vanne (4) n'est pas alimentée en courant électrique et la première conduite de fluide de pression (26) est reliée de manière pneumatique, respectivement hydraulique, à une troisième conduite de fluide de pression (32) menant jusqu'à un réservoir de fluide de pression (38) au moyen de la deuxième vanne (4), au moyen de la deuxième conduite de fluide de pression (28) et au moyen de la première vanne (2),
et **en ce que**, dans le quatrième état (118, 134, 138), la première vanne (2) se trouve dans son deuxième état de commutation, la deuxième vanne (4) est alimentée en courant électrique et la première conduite de fluide de pression (26) est bloquée par rapport à la deuxième conduite de fluide de pression (28) au moyen de la deuxième vanne (4) et cette deuxième conduite de fluide de pression (28) est reliée de manière pneumatique, respectivement hydraulique, à la troisième conduite de fluide de pression (32) au moyen de la première vanne (2) .

6. Dispositif de frein de stationnement destiné à immobiliser de manière électropneumatique ou électrohydraulique un véhicule, dans lequel ce dispositif de frein de stationnement (1, 1') comprend une première conduite de fluide de pression (26) dans laquelle un fluide de pression peut être guidé à une pression qui peut être fournie de manière pneumatique, respectivement hydraulique, à au moins un cylindre de frein (60), en particulier à un cylindre de frein à ressort accumulateur (60), dans lequel ce dispositif de frein de stationnement (1, 1') présente un premier état (104) dans lequel la pression dans la première conduite de fluide de pression (26) peut être diminuée jusqu'à une pression minimale, en particulier jusqu'à la pression de l'air ambiant, pour l'actionnement du cylindre de frein (60), et dans lequel ce dispositif de frein de stationnement (1, 1') peut être alimenté en énergie électrique d'un dispositif d'alimentation en énergie, dans lequel, dans un deuxième état (122), une pression respective peut être maintenue dans la première conduite de fluide de pression (26), dans lequel le dispositif de frein de stationnement (1, 1') est conçu de telle sorte que, dans le cas d'un arrêt du véhicule et en même temps dans le cas d'un frein de stationnement desserré, il adopte le deuxième état (122) et, dans le cas où l'alimentation en énergie électrique est interrompue en présence du deuxième état (122), il adopte le premier état (104) et le frein de stationnement peut par conséquent être enclenché, dans lequel, dans un troisième état (112, 142), une pression dans la première conduite de fluide de pression (26) peut être augmentée jusqu'à une pression maximale, en particulier une pression d'alimentation, pour relâcher le cylindre de frein (60), dans lequel le dispositif de frein de stationnement est conçu de telle sorte que, dans le cas où le troisième état (142) est présent, en réponse à un abaissement d'une vitesse de véhicule détectée en dessous d'une vitesse limite ou en réponse à une atteinte d'un arrêt du véhicule, il peut être commuté du troisième état (142) au deuxième état (122) directement ou par l'intermédiaire d'un autre état, **caractérisé par**
a) une deuxième conduite de fluide de pression (28) au moyen de laquelle une pression dans la première conduite de fluide de pression (26) peut être abaissée jusqu'à la pression minimale dans le premier état (104) et peut être augmentée jusqu'à la pression maximale dans le troisième état (112, 142) et
b) un quatrième état (118, 134, 136) dans lequel, pour maintenir la pression dans la première conduite de fluide de pression (26), la deuxième conduite de fluide de pression (28) est bloquée vis-à-vis de la première conduite de fluide de pression (26) et la deuxième conduite de fluide de pression (28) est reliée à un réservoir de pression (38),
c) dans lequel, dans le deuxième état, la deuxième conduite de fluide de pression (28) est bloquée vis-à-vis de la première conduite de fluide de pression (26) et la deuxième conduite de fluide de pression (28) est reliée à une sortie de fluide de pression (30),
dans lequel le dispositif de frein de stationnement (1, 1') est conçu de telle sorte que, dans le cas où le troisième état (112, 142) est présent, il peut être commuté tout d'abord dans le quatrième état (118) et ensuite dans le deuxième état (122) .

7. Dispositif de frein de stationnement selon la revendication 6, **caractérisé en ce que** le dispositif de frein de stationnement (1, 1') est conçu de telle sorte que, dans le cas où le deuxième état (122) est présent, en réponse à une augmentation de la vitesse du véhicule à une valeur limite prédéfinie, respectivement au-dessus de celle-ci, ou en réponse à un démarrage du véhicule, il peut être commuté tout d'abord dans le quatrième état (136) et ensuite dans le troisième état (142) .

8. Dispositif de frein de stationnement selon la revendication 6 ou 7, **caractérisé en ce que** le dispositif de frein de stationnement (1, 1') est conçu de telle sorte que, dans le cas où le premier état (104) est présent et où un allumage est activé, en réponse à un signal représentant un souhait de desserrage du frein de stationnement, il commute tout d'abord dans le troisième état (112) et ensuite, en particulier après que les pressions dans la première conduite de fluide de pression (26) et dans la deuxième conduite de fluide de pression (32) se soient équilibrées, il commute dans le quatrième état (118) puis dans le deuxième état (122).

9. Dispositif de frein de stationnement selon l'une des revendications 6 à 8, **caractérisé par** un moyen de détection de pression (64) au moyen duquel la pression dans la première conduite de fluide de pression (26), respectivement une pression commandée en fonction de cette pression, peut être déterminée, dans lequel le dispositif de frein de stationnement (1, 1') est conçu de telle sorte que, dans le cas où le deuxième état (122) est présent, en réponse à une chute de la pression déterminée en dessous d'une valeur de consigne de pression prédéfinie, il commute dans le quatrième état (132), commute ensuite dans le troisième état (110) et, une fois que la valeur de consigne de pression ou une valeur plus élevée a été atteinte ou après une durée prédéfinie, il commute à nouveau dans le quatrième état (118) et ensuite finalement dans le deuxième état (122).

10. Dispositif de frein de stationnement selon l'une des revendications 6 à 9, **caractérisé par** une première vanne (2), en particulier une électrovanne bistable à 3/2 voies, une deuxième vanne (4), en particulier une électrovanne à 2/2 voies, une troisième conduite de fluide de pression (32), laquelle peut être reliée à un réservoir de fluide de pression (38), et une sortie de fluide de pression (30) à travers laquelle du fluide de pression peut être évacué au moyen de la première vanne (2) pour réduire une pression dans la deuxième conduite de fluide de pression (28),
dans lequel, dans le premier état (104), la première conduite de fluide de pression (26) peut être reliée de manière pneumatique, respectivement hydraulique, à la sortie de fluide de pression (30) au moyen de la deuxième vanne (4) non alimentée en courant électrique, au moyen de la deuxième conduite de fluide de pression (28) et au moyen de la première vanne (2) se trouvant dans son premier état de commutation,
dans lequel, dans le deuxième état (122), la première conduite de fluide de pression (26) peut être bloquée par rapport à la deuxième conduite de fluide de pression (28) au moyen de la deuxième vanne (4) non alimentée en courant électrique et la deuxième conduite de fluide de pression (28) peut être reliée de manière pneumatique, respectivement hydraulique, à la sortie de fluide de pression (30) au moyen de la première vanne (2) se trouvant dans son premier état de commutation,
dans lequel, dans le troisième état (112, 142), la première conduite de fluide de pression (26) peut être reliée de manière pneumatique, respectivement hydraulique, à la troisième conduite de fluide de pression (32) au moyen de la deuxième vanne (4) non alimentée en courant électrique, au moyen de la deuxième conduite de fluide de pression (28) et au moyen de la première vanne (2) se trouvant dans son deuxième état de commutation,
et dans lequel, dans le quatrième état (118, 134, 138), la première conduite de fluide de pression (26) peut être bloquée par rapport à la deuxième conduite de fluide de pression (28) au moyen de la deuxième vanne (4) alimentée en courant électrique et cette deuxième conduite de fluide de pression (28) peut être reliée de manière pneumatique, respectivement hydraulique, à la troisième conduite de fluide de pression (32) au moyen de la première vanne (2) se trouvant dans son deuxième état de commutation.

11. Système de freinage, **caractérisé en ce que** ce système de freinage est conçu pour la mise en oeuvre du procédé selon l'une des revendications 1 à 5 ou comprend un dispositif de frein de stationnement (1, 1') selon l'une des revendications 6 à 10.

12. Véhicule, **caractérisé en ce que** ce véhicule est conçu pour la mise en oeuvre du procédé selon l'une des revendications 1 à 5 et/ou comprend un dispositif de frein de stationnement (1, 1') selon l'une des revendications 6 à 10 et/ou un système de freinage selon la revendication 11.
